# EUROPEAN PATENT APPLICATION

(11) **EP 3 171 677 A1**
(43) Date of publication of application: **24.05.2017**
(21) Application number: 16150973.2
(22) Date of filing: 12.01.2016
(51) Int. Cl.: H05K 1/02, H01B 3/30, H01B 7/08, H01B 13/00

(54) **IMPROVED PLASTIC-CLADDING FILAMENT STRUCTURE**

(30) Priority: 19.11.2015 TW 104218621 U
(71) Applicant: King's Metal Fiber Technologies Co., Ltd., 42060 Taichung City (TW)
(72) Inventor: KANG, Yu Hsun, 10451 Taipei City (TW); LIAO, Shu Fen, 10451 Taipei City (TW); HOU, Jaang Jiun, 10451 Taipei City (TW); WANG, Hao Chen, 10451 Taipei City (TW); CHEN, Reng Sho, 10451 Taipei City (TW)
(74) Representative: Cabinet Chaillot

(57) **Abstract**

An improved plastic-cladding filament structure includes a combined arrangement of a base layer, thermosetting polymer glue, and at least one conductive filament. The thermosetting polymer glue is combined with the base layer. The at least one conductive filament is enclosed and housed in the thermosetting polymer glue to allow the conductive filament to be attached to the base layer through heating and setting of the thermosetting polymer glue. By means of the property the thermosetting polymer glue that the thermosetting polymer glue gets set after being heated to a predetermined temperature and melted and shaped and once heated to get set and shaped, further heating does not change the shape, the thermosetting polymer glue that encloses and houses the conductive filament can be set to form any desired shape to facilitate combination thereof with the base layer.

## Description

### BACKGROUND OF THE INVENTION

### 1. Field of the Invention

The present invention relates generally to an improved plastic-cladding filament structure, and more particularly to a combined arrangement of a base layer, thermosetting polymer glue, and at least one conductive filament, in which the thermosetting polymer glue can be set to form any desired shape to facilitate combination thereof with the base layer, making it applicable to all sorts of conductive filaments, such as stainless steel based conductive filaments, carbon fiber based conductive filaments, and sputtered fiber based conductive filaments.

### 2. Description of Related Art

Modern fabric articles must suit the needs for comfortableness, ventilation, and cooling when they are worn. Thus, manufacturers are devoted themselves to researches and development of new fibers and filaments and new ways of weaving and knitting, pursuing such performance of fabric articles just mentioned.

Recently, development is made on the so-called smart clothing by the manufacturers, which is a cloth equipped with electronic components and thus involving a smart function and, in addition, may be repeatedly washable and provides functionality of detecting physiological conditions, such as electrocardiograph, body temperature, breath, movement, and falling down and providing secured physiological signal monitoring and recording service through timely wireless transmission. The early way of including a flexible sheet embedded in clothing has been improved and evolved to inclusion of a conductive filament in a fiber in order to achieve control of electrical current and electrical voltage and transmission of detection signals.

However, the state-of-the-art techniques of including a conductive filament in a fiber for making, through weaving or knitting, a fabric article may cause shorting or poor contact by breaking the conductive filament through repeated washing or kneading so that the performance of control of electrical current and electrical voltage and transmission of detection signals becomes deteriorated. It is also very difficult to repair the conductive filament. Thus, the fabric article may be simply disposed of when situations, such as shorting or poor contact, occur and repeated use become impossible.

Thus, in view of the above problems, the present invention aims to provide a plastic-cladding filament structure that provides an effect of repeated attachability and facilitating subsequent processing of a product of clothing, allowing for easy operation by a user for assembly.

### SUMMARY OF THE INVENTION

The primary object of the present invention is to provide an improved plastic-cladding filament structure, which comprises a combined arrangement of a base layer, thermosetting polymer glue, and at least one conductive filament. The thermosetting polymer glue is combined with the base layer. The at least one conductive filament is enclosed and housed in the thermosetting polymer glue to allow the conductive filament to be attached to the base layer through heating and setting of the thermosetting polymer glue. By means of the property the thermosetting polymer glue that the thermosetting polymer glue gets set after being heated to a predetermined temperature and melted and shaped and once heated to get set and shaped, further heating does not change the shape, the thermosetting polymer glue that encloses and houses the conductive filament can be set to form any desired shape to facilitate combination thereof with the base layer, thereby improving utilization thereof.

Another object of the present invention is to provide an improved plastic-cladding filament structure, wherein the thermosetting polymer glue comprises one of epoxy resin, polyurethane (PU), melamine resin, phenolic resin (PF), melamine formaldehyde resin (MF), polyamic acid rein (PAA), furan resin, resorcinol formaldehyde resin (RF), xytene formaldehyde resin, unsaturated polyester (UP), polyimide (PI), silicone plastics (SP), polydiarylphthalate (PDAP), urea formaldehyde resin (UF), and polymerized siloxanes (SI), bismaleimide triazine resin (BT). The thermosetting polymer glue comprises a linear molecular chain that contains a double bond C=C, which helps improve flexibility of the thermosetting polymer glue. When temperature reaches a level sufficient to break π bond of the double bond C=C to generate free radicals, cross-linking may readily occur for conversion into a network like structure. Under this condition, with the temperature returning back to room temperature, since the double bond C=C no longer exists, the thermosetting polymer glue may only get set and hardened and cannot get back to the original melting condition, this making the thermosetting polymer glue shapeable for just one time, thereby improving the property of heating and setting of the entirety.

A further object of the present invention is to provide an improved plastic-cladding filament structure, wherein the base layer is one of paper, fabric, film, plate, or elastic body. The base layer has an adhesive surface and the thermosetting polymer glue that encloses and houses the conductive filament is combined with the adhesive surface of the base layer and attachability can be achieved with the adhesive surface of the base layer, or alternatively, the base layer comprises a non-adhering surface and the thermosetting polymer glue that encloses and houses the conductive filament is first combined with the non-adhering surface of the base layer and then a layer of adhesive is coated on the non-adhering surface of the base layer with which the thermosetting polymer glue that encloses and houses the conductive filament is combined, whereby attachability of the base layer that carries thereon the thermosetting polymer glue that encloses and houses the conductive filament is achieved with the adhesive so coated so that the present invention allows the base layer to be turned into an adhesive tape like device for attaching the thermosetting polymer glue that encloses and houses the conductive filament to any fabric article or object, providing an effect of repeated attachability and adjustability for facilitating subsequent processing of product, thereby improving overall convenience.

Yet a further object of the present invention is to provide an improved plastic-cladding filament structure, wherein the base layer is one of paper, fabric, film, plate, or elastic body and the fabric is tailored and sewn to form a fabric article and the fabric article is one of a garment, trousers, gloves, underwear, a vest, a corsage, and a tube-top. The thermosetting polymer glue that encloses and houses the conductive filament therein is combined with the fabric such that the conductive filament can be arranged in a linear configuration, or alternatively, the conductive filament is bent to show an S-shaped configuration or a Z-shaped configuration so as to improve extendibility thereof, protecting the conductive filament from being easily pulled to break, with the thermosetting polymer glue that encloses and houses the conductive filament being directly combined with the fabric, whereby the conductive filament may form a circuit that complies with the configuration of the fabric for achieving the performance of signal transmission or electrical power transmission thereby improving overall utilization.

To achieve the above objects, the present invention provides an improved plastic-cladding filament structure, which comprises a base layer, thermosetting polymer glue, and at least one conductive filament. The thermosetting polymer glue is combined with the base layer. The at least one conductive filament is enclosed and housed in the thermosetting polymer glue to allow the conductive filament to be attached to the base layer through heating and setting of the thermosetting polymer glue.

### BRIEF DESCRIPTION OF THE DRAWINGS

The present invention can be fully understood from the following detailed description and preferred embodiments with reference to the accompanying drawings, in which:
FIG. 1 is a perspective view showing a primary embodiment of the present invention;
FIG. 2 is a cross-sectional view taken along line B-B of the primary embodiment of the present invention;
FIG. 3 is a perspective view illustrating a conductive filament of the primary embodiment of the present invention is provided with an extension section;
FIG. 4 is a perspective view illustrating the primary embodiment of the present invention comprises multiple conductive filaments;
FIG. 5 is a perspective view illustrating a thermosetting polymer glue of the primary embodiment of the present invention is provided with hollowed sections;
FIG. 6 is a cross-sectional view illustrating a base layer of a first example of application of the present invention comprises an adhesive surface;
FIG. 7 is a cross-sectional view illustrating a base layer of a second example of application of the present invention is provided with adhesive thereon; and
FIG. 8 is a schematic view illustrating a thermosetting polymer glue that encloses and houses a conductive filament combined with a fabric article in a third example of application of the present invention.

### DETAILED DESCRIPTION OF THE PREFERRED EMBODIMENTS

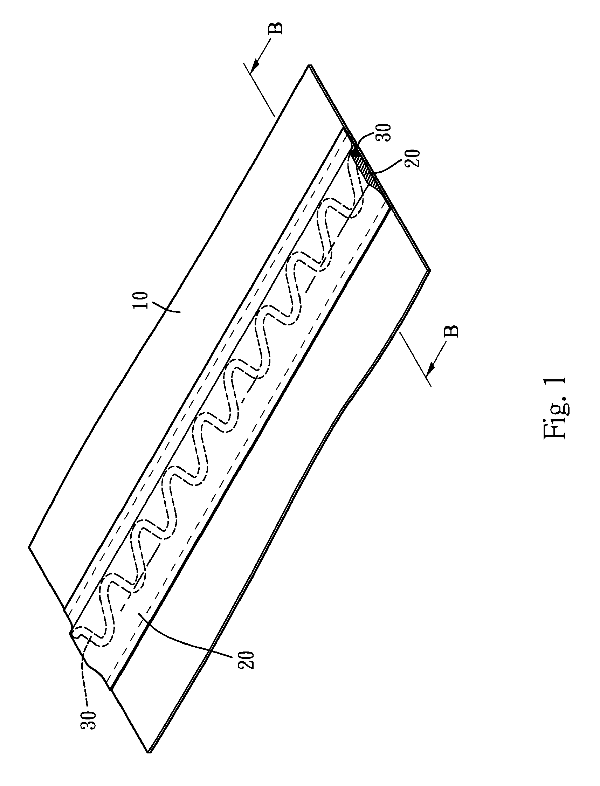

Referring to FIGS. 1-8, schematic views are given to illustrate embodiments of the present invention. A preferred embodiment of the present invention provides an improved plastic-cladding filament structure, which is applicable to being combinable with a fabric article to provide the fabric article with a circuit that achieves performance of signal transmission or electrical power transmission.

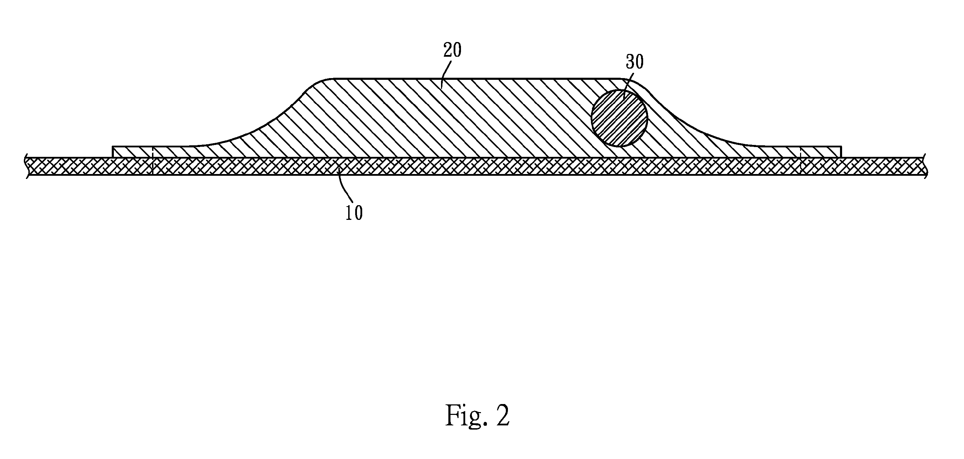

In a primary example of embodiment of the present invention, the improved plastic-cladding filament structure generally comprises a base layer 10, thermosetting polymer glue 20, and at least one conductive filament 30 (as shown in FIGS. 1 and 2). The thermosetting polymer glue 20 is combined with the base layer 10. The thermosetting polymer glue 20 comprises one of epoxy resin, polyurethane (PU), melamine resin, phenolic resin (PF), melamine formaldehyde resin (MF), polyamic acid rein (PAA), furan resin, resorcinol formaldehyde resin (RF), xytene formaldehyde resin, unsaturated polyester (UP), polyimide (PI), silicone plastics (SP), polydiarylphthalate (PDAP), urea formaldehyde resin (UF), and polymerized siloxanes (SI), bismaleimide triazine resin (BT). The thermosetting polymer glue 20 comprises a linear molecular chain that contains a double bond C=C, which helps improve flexibility of the thermosetting polymer glue 20. When temperature reaches a level sufficient to break π bond of the double bond C=C to generate free radicals, cross-linking may readily occur for conversion into a network like structure. Under this condition, with the temperature returning back to room temperature, since the double bond C=C no longer exists, the thermosetting polymer glue 20 may only get set and hardened and cannot get back to the original melting condition, this making the thermosetting polymer glue 20 shapeable for just one time.

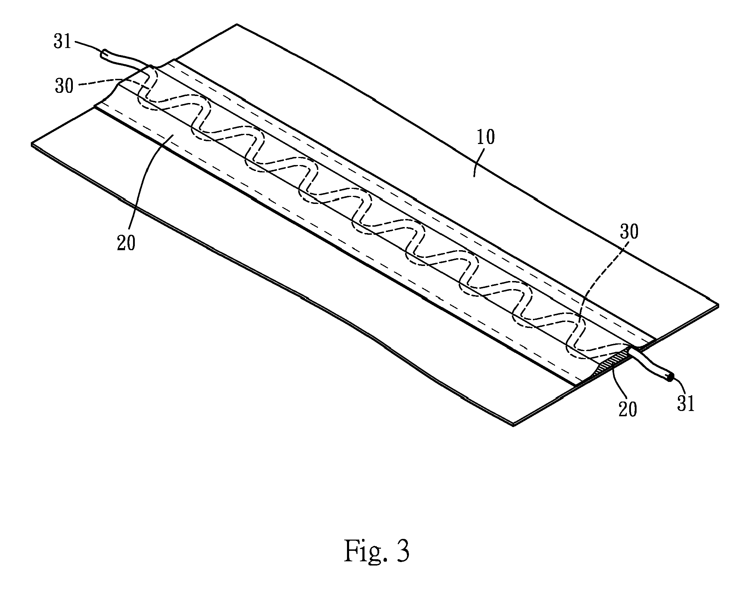

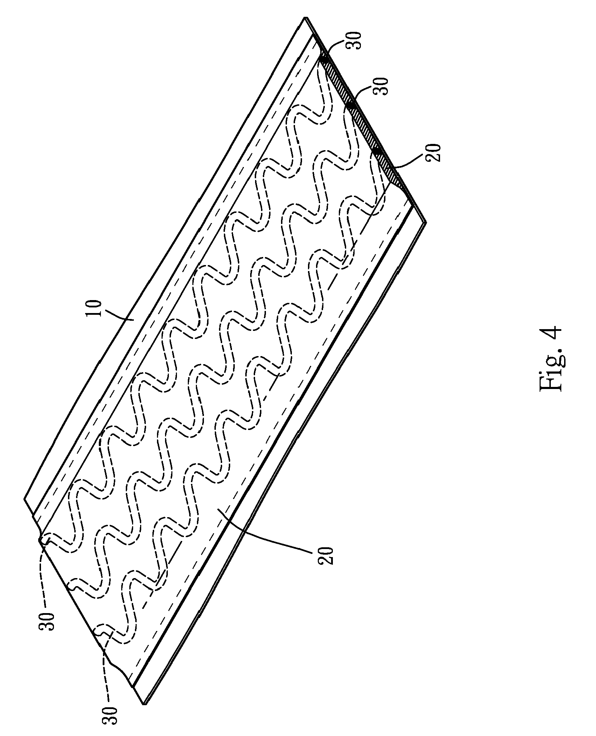

The at least one conductive filament 30 is formed of a material comprising one of stainless steel, carbon fiber, sputtered fiber, or other materials showing similar electrical conduction property in order to provide the conductive filament 30 with electrical conductivity. The at least one conductive filament 30 is enclosed and housed in the thermosetting polymer glue 20, or alternatively multiple conductive filaments 30 (see FIG. 4) are used. The conductive filament 30 may use the property the thermosetting polymer glue 20 that the thermosetting polymer glue 20 gets set after being heated to a predetermined temperature and melted and shaped and once heated to get set and shaped, further heating does not change the shape, so that the conductive filament 30 is combined with the base layer 10 by means of the thermosetting polymer glue 20 being heated and set. Further, the conductive filament 30 may comprise an extension section 31 (as shown in FIG. 3). The extension section 31 of the conductive filament 30 projects outward and is exposed outside the thermosetting polymer glue 20 so that the extension section 31 of the conductive filament 30 is electrically connectable to an electronic device (not shown) or is connectable with another conductive filament 30 (not illustrated in the drawings). Further, the combination between the thermosetting polymer glue 20 that encloses and houses the conductive filament 30 and the base layer 10 is achieved with sewing or adhesive. Sewing is achieved by using stitching line to stitch the thermosetting polymer glue 20 that encloses and houses the conductive filament 30 to the base layer 10 so that the thermosetting polymer glue 20 that encloses and houses the conductive filament 30 and the base layer 10 may be tightly attached to each other. Combination achieved with adhesive will be described hereinafter.

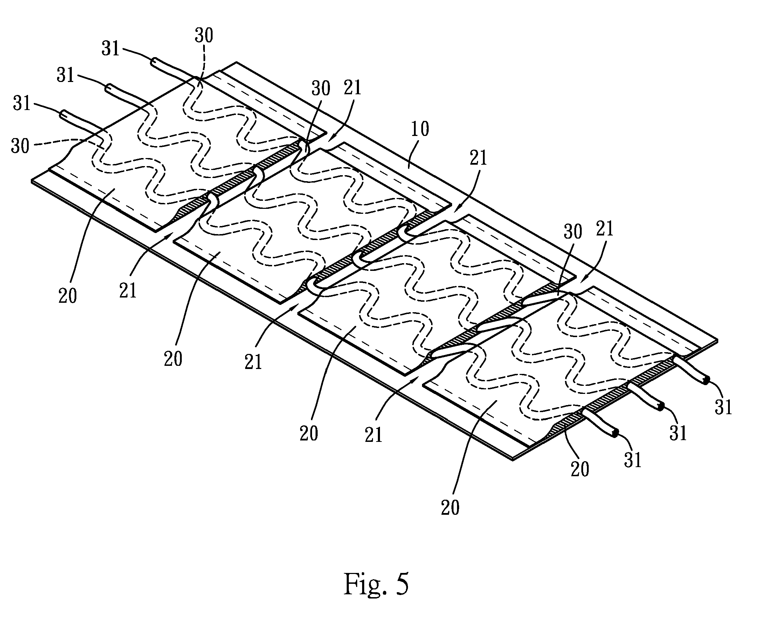

In the primary example of embodiment of the improved plastic-cladding filament structure according to the present invention, the thermosetting polymer glue 20 that encloses and houses the conductive filament 30 is provided with at least one hollowed section 21 (three hollowed sections 21 being involved in the instant embodiment) such that the hollowed sections 21 of the thermosetting polymer glue 20 allow the conductive filament 30 to be partly exposed (as shown in FIG. 5), whereby the conductive filament 30 may be connected to an external electronic device or power transmission device (not shown) in a sectionized manner, or being connectable with other conductive filament 30 (not illustrated in the drawings), to provide the present invention with extendibility and expandability.

A first example of application of the improved plastic-cladding filament structure according to the present invention comprises a base layer 10, thermosetting polymer glue 20, and at least one conductive filament 30. The at least one conductive filament 30 is enclosed and hosed in the thermosetting polymer glue 20 so that the conductive filament 30 may be combined with the base layer 10 by means of the thermosetting polymer glue 20 being heated and getting set. The base layer 10 can be one of paper, fabric, film, plate, and elastic body. Paper used herein can be all sorts of paper product (not shown) made of pulp, such as an ordinary paper sheet, a cardboard, and a corrugated paperboard. Fabric used herein can be a piece of fabric (not shown) formed by weaving or knitting or otherwise processing all sorts of fibers or filaments. Film used herein can be a flexible film of plastics or a flexible film of carbon material or other films formed of flexible materials (not shown). Plate used herein can be a rigid plate made of plastics, a rigid plate made of metals, a rigid plate made of carbon materials, or plates made of other rigid materials (not shown). The elastic body used herein can be a fabric or an elastic band (not shown) formed by weaving or knitting or otherwise processing all sorts of elastic fibers or filaments.

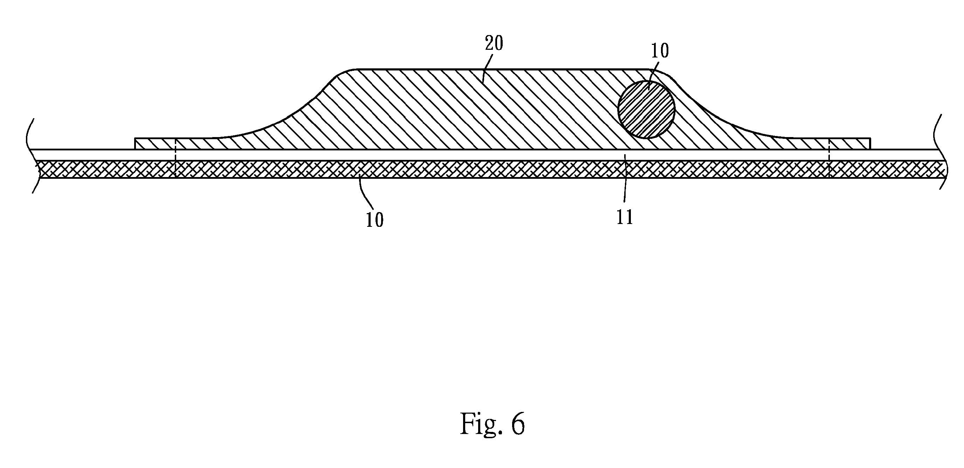

The base layer 10 comprises an adhesive surface 11 (as shown in FIG. 6). The thermosetting polymer glue 20 that encloses and houses the conductive filament 30 is combined with the adhesive surface 11 of the base layer 11, wherein the combination between the thermosetting polymer glue 20 that encloses and houses the conductive filament 30 and the base layer 10 is achieved with sewing or adhesive. In the instant example, the base layer 10 is coated with adhesive to form the adhesive surface 11 so that the thermosetting polymer glue 20 that encloses and houses the conductive filament 30 can be adhesively attached to the base layer 10. Alternatively, stitching lines may be used to stitch the thermosetting polymer glue 20 that encloses and houses the conductive filament 30 to the base layer 10 such that a remaining part of the adhesive surface 11 of the base layer 10 may be used to attach to an object (such as a fabric article or a flexible material), whereby the present invention allows the base layer 10 to be turned into an adhesive tape like device for attaching the thermosetting polymer glue 20 that encloses and houses the conductive filament 30 to any fabric article or object, providing an effect of repeated attachability and adjustability for facilitating subsequent processing of product.

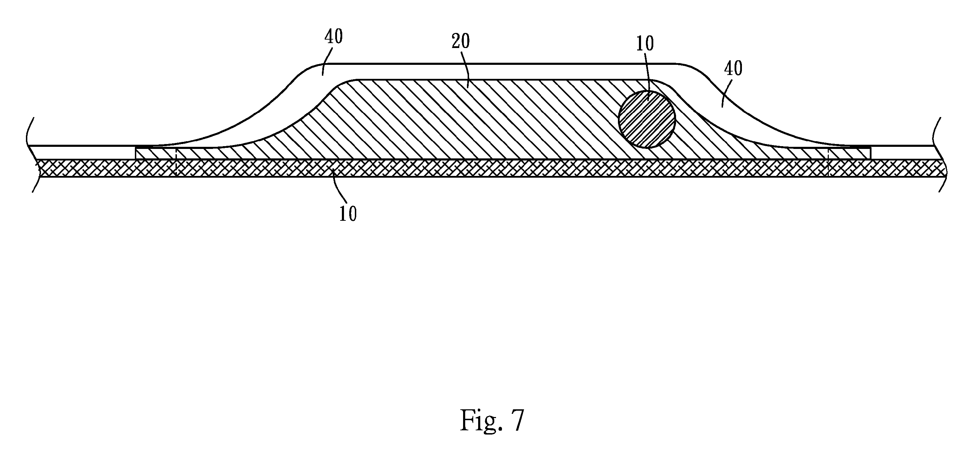

A second example of application of the improved plastic-cladding filament structure according to the present invention comprises a base layer 10, thermosetting polymer glue 20, and at least one conductive filament 30. The at least one conductive filament 30 is enclosed and hosed in the thermosetting polymer glue 20 so that the conductive filament 30 may be combined with the base layer 10 by means of the thermosetting polymer glue 20 being heated and getting set. The base layer 10 can be one of paper, fabric, film, plate, and elastic body. The base layer 10 does not include an adhesive surface. The thermosetting polymer glue 20 that encloses and houses the conductive filament 30 is first combined to a non-adhesive surface of the base layer 10, wherein the combination between the thermosetting polymer glue 20 that encloses and houses the conductive filament 30 and the base layer 10 is achieved with sewing or adhesive. In the instant example, the base layer 10 is coated with adhesive to make the surface adhering so that the thermosetting polymer glue 20 that encloses and houses the conductive filament 30 can be adhesively attached to the base layer 10. Alternatively, stitching lines may be used to stitch the thermosetting polymer glue 20 that encloses and houses the conductive filament 30 to the base layer 10 and after the combination is made, a layer of adhesive 40 is applied to the non-adhering surface of the base layer 10 to which the thermosetting polymer glue 20 that encloses and houses the conductive filament 30 is combined (as shown in FIG. 7) to provide the base layer 10 with the adhesive 40 so that the adhesive 40 helps attach the base layer 10 to an object (such as a fabric article or a flexible material), whereby the present invention allows the base layer 10 to be turned into an adhesive tape like device for attaching the thermosetting polymer glue 20 that encloses and houses the conductive filament 30 to any fabric article or object, providing an effect of repeated attachability and adjustability for facilitating subsequent processing of product.

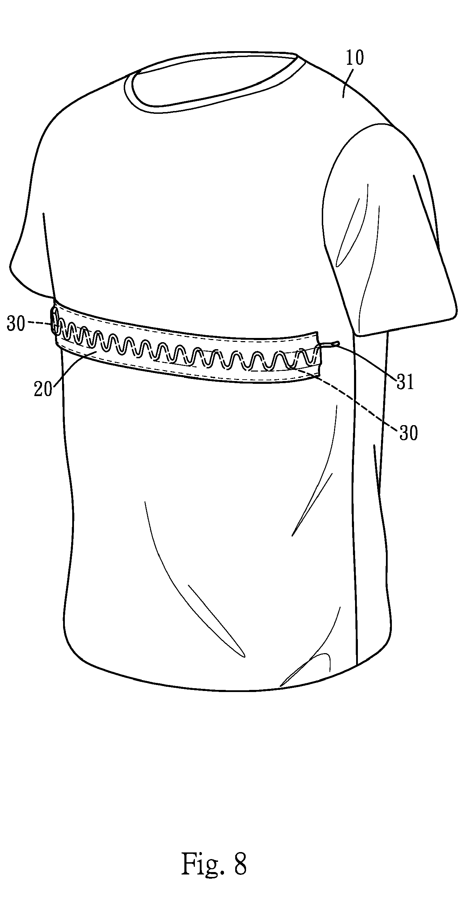

A third example of application of the improved plastic-cladding filament structure according to the present invention comprises a base layer 10, thermosetting polymer glue 20, and at least one conductive filament 30. The at least one conductive filament 30 is enclosed and hosed in the thermosetting polymer glue 20 so that the conductive filament 30 may be combined with the base layer 10 by means of the thermosetting polymer glue 20 being heated and getting set. The base layer 10 can be one of paper, fabric, film, plate, and elastic body, wherein the fabric can be tailored and sewn to form a fabric article (as shown in FIG. 8). The fabric article can be one of a garment, trousers, gloves, underwear, a vest, a corsage, and a tube-top or other types of fabric articles made by means of weaving/knitting and sewing. The fabric article may comprise an elastic material or a non-elastic material, wherein the combination between the thermosetting polymer glue 20 that encloses and houses the conductive filament 30 and the fabric is achieved with sewing or adhesive. In the instant example, sewing is used so that stitching lines are used to stitch the thermosetting polymer glue 20 that encloses and houses the conductive filament 30 to the fabric such that the thermosetting polymer glue 20 that encloses and houses the conductive filament 30 is tightly attached to the fabric article and when the thermosetting polymer glue 20 that encloses and houses the conductive filament 30 is attached to the fabric, the conductive filament 30 can be arranged in a linear configuration, or alternatively, the conductive filament 30 can be bent to show an S-shaped or Z-shaped configuration to improve extendibility thereof, protecting the conductive filament 30 from being easily pulled to break, with the thermosetting polymer glue 20 that encloses and houses therein the conductive filament 30 being directly combined with the fabric so that the conductive filament 30 may form a circuit that complies with the configuration of the fabric for achieving the performance of signal transmission or electrical power transmission thereby improving overall utilization thereof.

Further, in the above-described first, second, third, and fourth examples of application of the plastic-cladding filament structure according to the present invention, the fabric article is provided with signal transmission contact terminals (not shown) and the signal transmission contact terminal is connected to at least one detection module (not shown), wherein signal transmission or electrical power transmission between the signal transmission contact terminals and the at least one detection module is achieved with the thermosetting polymer glue 20 that encloses and houses the conductive filament 30. The detection module used herein may be formed by weaving or knitting a plurality of non-conductive yarns and a plurality of conductive yarns, or alternatively, an electrode plate that is entirely formed by weaving or knitting a plurality of conductive yarns so that the entire electrode plate shows a property of electrical conduction, allowing the detection module to detect a physiological signal or tilting of a human body that is then transmitted to the signal transmission contact terminals. Further, the signal transmission contact terminals may be combined with a signal transmitter (not shown), which comprises therein a wireless transmission module that transmits, in a wireless manner, the physiological signal or a wireless signal indicating variation of tilting of human body to an electronic device (such as a smart phone, an intelligent tablet computer, a notebook computer, a desktop computer, and medical facility) or cloud for facilitating understanding of the detection result to provide preventive medical treatment.

Based on the above detailed description, those skilled in the art may appreciate that the present invention can achieve the above-discussed objectives. However, it is noted that the above description is made only to a preferred embodiment of the present invention and is not intending to limit the true scope where the present invention may be put into practice. Thus, simple and equivalent variations and modifications made on the disclosure of the specification and the attached claims are all considered within the scope of the present invention.

## Claims

1. An improved plastic-cladding filament structure, comprising:
a base layer;
thermosetting polymer glue, which is combined with the base layer; and
at least one conductive filament, which is enclosed and housed in the thermosetting polymer glue to allow the conductive filament to be attached to the base layer through heating and setting of the thermosetting polymer glue.

2. The improved plastic-cladding filament structure as claimed in Claim 1, wherein the thermosetting polymer glue comprises one of epoxy resin, polyurethane (PU), melamine resin, phenolic resin (PF), melamine formaldehyde resin (MF), polyamic acid rein (PAA), furan resin, resorcinol formaldehyde resin (RF), xytene formaldehyde resin, unsaturated polyester (UP), polyimide (PI), silicone plastics (SP), polydiarylphthalate (PDAP), urea formaldehyde resin (UF), and polymerized siloxanes (SI), bismaleimide triazine resin (BT).

3. The improved plastic-cladding filament structure as claimed in Claim 1, wherein the base layer comprises an adhesive surface and the thermosetting polymer glue that encloses and houses the conductive filament is combined with the adhesive surface of the base layer.

4. The improved plastic-cladding filament structure as claimed in Claim 1, wherein the base layer comprises a non-adhering surface and the thermosetting polymer glue that encloses and houses the conductive filament is first combined with the non-adhering surface of the base layer and then a layer of adhesive is coated on the non-adhering surface of the base layer on which the thermosetting polymer glue that encloses and houses the conductive filament is attached.

5. The improved plastic-cladding filament structure as claimed in Claim 1, 3, or 4, wherein the base layer comprises one of paper, fabric, film, plate, and elastic body.

6. The improved plastic-cladding filament structure as claimed in Claim 5, wherein the fabric is tailored and sewn to form a fabric article, which is one of a garment, trousers, gloves, underwear, a vest, a corsage, and a tube-top, the fabric article comprising an elastic material or a non-elastic material.

7. The improved plastic-cladding filament structure as claimed in Claim 1, 3, or 4, wherein the thermosetting polymer glue is heated and set to be combined with the base layer in such a way that the conductive filament is set in a linear form.

8. The improved plastic-cladding filament structure as claimed in Claim 1, 3, or 4, wherein the thermosetting polymer glue is heated and set to be combined with the base layer in such a way that the conductive filament is bent to show an S-shaped configuration or a Z-shaped configuration.

9. The improved plastic-cladding filament structure as claimed in Claim 1, 3, or 4, wherein the combination is achieved with sewing or adhesive.

10. The improved plastic-cladding filament structure as claimed in Claim 1, wherein the conductive filament comprises an extension section, which is located outside the thermosetting polymer glue.

11. The improved plastic-cladding filament structure as claimed in Claim 1, wherein the thermosetting polymer glue that encloses and houses the conductive filament comprises at least one hollowed section to partly expose the conductive filament.
